# EUROPEAN PATENT SPECIFICATION

(11) **EP 2 230 422 B1**
(45) Date of publication and mention of the grant of the patent: **07.03.2012**
(21) Application number: 08860197.6
(22) Date of filing: 05.11.2008
(51) Int. Cl.: F16H 7/12

(54) **TENSION ADJUSTER FOR BELTS**
SPANNUNGSEINSTELLER FÜR RIEMEN
TENDEUR INTÉGRÉ POUR COURROIES

(30) Priority: 13.12.2007 ES 200703293
(43) Date of publication of application: 22.09.2010
(73) Proprietor: Koyo Bearings España, S.A., 48002 Bilbao (Vizcaya) (ES)
(72) Inventor: CUEVAS MUÑOZ, José Luis, E-48002 Bilbao (Vizcaya) (ES)
(74) Representative: Ungria Lopez, Javier
(86) International application number: PCT/ES2008/000682
(87) International publication number: WO 2009/074698

(56) References cited:
- DE-A1- 4 223 324
- ES-T3- 2 194 705
- GB-A- 2 233 063
- US-A- 5 244 438
- US-A- 5 919 107

## Description

### OBJECT OF THE INVENTION

The present invention, as expressed in the title of this specification, relates to an integrated tension adjuster for belts applicable to tightening of synchronisation belts between one or several camshafts and the crankshaft of a motor.

In general, It is destined for adjusting the tension of belts that transmit rotation from a first shaft to a second shaft.

### BACKGROUND OF THE INVENTION

Torsional spring-actuated belt tension adjusters are widely used for tightening belts. One widespread application of these tension adjusting devices is the tightening of synchronisation belts between one or several camshafts and the crankshaft of automobile motors.

These devices normally consist of a support that is fixed to the block of the motor by means of a screw introduced into a pivot having an eccentric orifice, which is in turn introduced into another hollow axle, i.e. the fixed part of the tension adjusting device. The mobile tension adjusting device is disposed around the hollow axle. Said mobile device is usually composed of a standard ball bearing whereto a plastic or metal pulley, an anti-friction bushing to allow a gentle oscillation movement of the mobile part with respect to the fixed part and an aluminium part introduced into the internal diameter of the standard ball bearing that houses the torsional spring, are coupled.

The patent of invention published under number ES 2249603 is closely related to the invention. Said patent discloses a tension adjuster for belts for automobile motors. The device is composed of a metal plate or support plate having a projection that is introduced into an opening in the block of the motor. Said plate or support also has a fold used to delimit the oscillation of the mobile part in conjunction with the stops of the aluminium part. There is a hollow axle wherethrough a second axle having an eccentric orifice, which allows introduction of a screw for fixing the tension adjusting device assembly to the block of the motor, Is introduced. An anti-friction bushing is disposed on said hollow axle, whereon an aluminium part having an eccentric orifice that houses a spring which has its ends fixed to the aluminium part and to the metal plate or support plate is disposed. The aluminium part is in turn introduced into the internal diameter of a standard ball bearing. The aluminium part also has front and rear oscillation stops. Embracing the ball bearing is a pulley joined thereto which is in contact with the respective belt to be tightened.

A known problem with this design is that if the installer inappropriately adjusts the tension adjuster at the time of installation and does not maintain the fold of the support plate equidistant between the lower stop and upper stop of the aluminium part, during operation of the tension adjusting device, the front stop or rear stop of said aluminium part will repeatedly hit against the fold of the support plate, depending on whether the adjustment error was produced in one direction or other, causing wear of the aluminium stops and breakage of the metal plate fold, leading to sudden belt detensioning and, consequently, motor breakdown. This type of failure in this type of product is very common in the spare parts market.

Similar belt tensioners are known from US 5244438 A and DE 4223324 A.

### DESCRIPTION OF THE INVENTION

In order to achieve the objectives and avoid the drawbacks mentioned in the preceding sections, the invention proposes an Integrated tension adjuster for belts formed from a support plate having an aperture wherein a cylindrical tubular body is embedded by way of a guiding axis by its lower part.

The support plate is supported on the block of the motor or other adequate surface, while also having a fold that is housed in a complementary cavity established on the plate bearing surface. The guide axis has a notch on its upper part by way of a fixed indicator element for adjusting the tension adjusting device, also including orifices for applying a tool to rotate the device.

An installation guide is disposed inside the guide axis, having an eccentric longitudinal duct wherethrough a fixing screw is introduced for fixing the tension adjusting assembly to the respective bearing surface.

The installation guide also has orifices for manually rotating the tension adjusting device, while said installation guide can freely rotate with respect to the guide axis.

On the other hand, the guide axis Is coupled within an anti-friction bushing embedded in an eccentric housing belonging to the body of the inner race track of a ball bearing, while said bushing is embedded by its lower part in a ring-shaped lid disposed in a recess of the ball bearing,

The friction between the guide axis and the upper face of the inner race track is reduced by incorporating an indicator washer having a projection which acts as a mobile indicator for adjusting the device of the invention, said projection normally made to coincide with the notch (fixed indicator) of the guide axis.

A torsional spring is housed inside the lid, providing the necessary force for the mobile part to pivot with respect to the guide axis and a pulley integrated in the outer race track of the ball bearing.

One of the ends of the torsional spring is hooked onto the support plate, while the opposite end is housed in a minute recess established in a lateral face belonging to a characteristic projecting stop that forms an integral part of the inner race track of the ball bearing.

The projecting stop is disposed in correspondence with a perimeter aperture delimited by a circumferential edge and two radial edges that limit the oscillation path in either direction of rotation of the tension adjusting device of the invention, in such a manner that when said stop is disposed in an intermediate area of the perimeter aperture, the mobile device can freely oscillate in both directions of rotation in accordance with the variations in the tension of the belt at a given time.

Another characteristic of the invention is that outer race track of the ball bearing integrates the pulley, thereby eliminating the potential failure of the pulley becoming separated from the ball bearing.

For the purpose of helping to better understand this specification, it is accompanied by the following figures which form an integral part thereof and wherein the object of the invention has been represented in an illustrative and non-limiting manner.

### BRIEF DESCRIPTION OF THE FIGURES

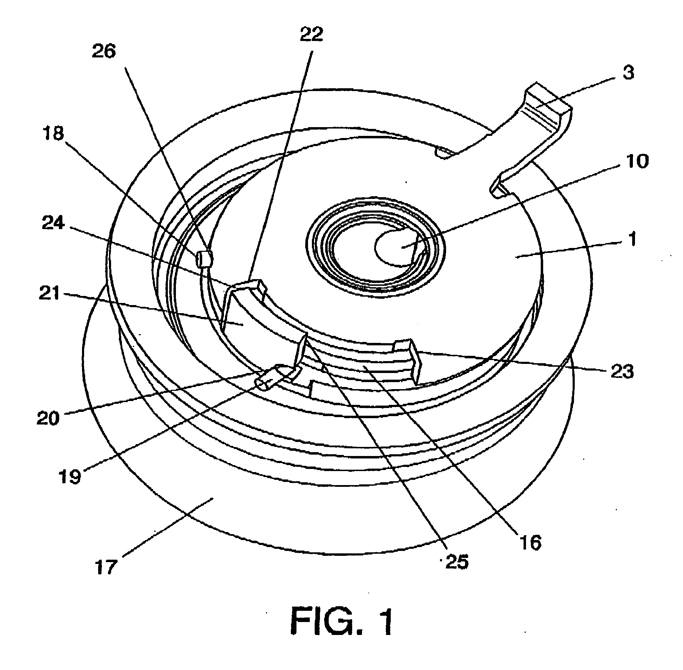

Figure 1 shows a perspective view of the tension adjuster for belts that is the object of the invention.

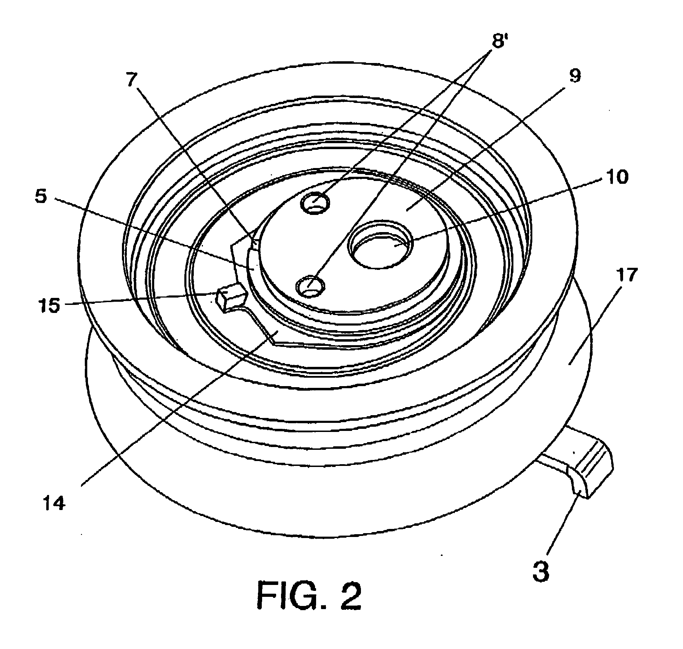

Figure 2 shows another perspective view of the tension adjuster.

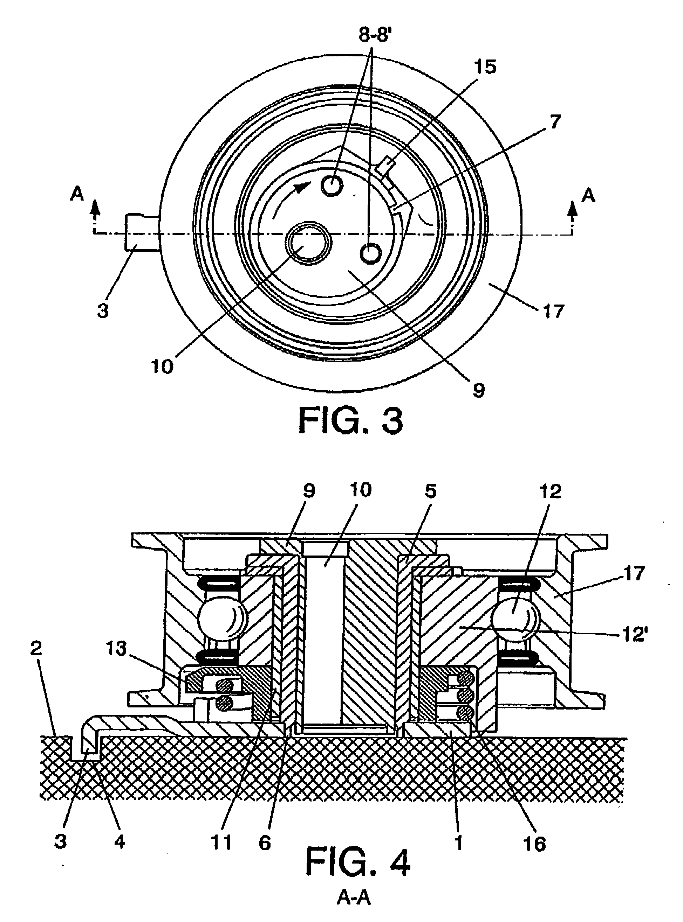

Figure 3 shows a plan view of the tension adjuster of the invention.
Figure 4 shows an elevational sectional view taken along line A-B of the preceding figure.

### DESCRIPTION OF THE PREFERRED EMBODIMENT

Considering the numbering adopted in the figures, the tension adjuster for belts comprises a support plate 1 which is the element that is supported on the block of the motor or other bearing surface 2. This support plate 1 has a folded end by way of a flange 3 which is introduced into a recess 4 in the block of the motor or surface 2 that supports the device assembly.

There is a guide axis having a cylindrical tubular structure 5 introduced into a housing of the support plate 1, fixed thereto by means of a special lamination operation along its lower outer edge 6 on a chamfered corner made on the support plate 1. This join must be made to a certain precision, as said join maintains the tension adjusting device assembly axially joined together. The guide axis 5 has a notch 7 on its upper diameter which acts as a fixed indicator for adjusting the tension adjuster.

An installation guide 9 having an eccentric orifice 10 for introducing a screw (not represented in the figures) is housed in the internal diameter of said guide axis 5, which fixes the tension adjusting device to the block of the motor or other bearing surface 2. Said installation guide 9 has orifices 8, 8' for manually rotating the tension adjusting device. Said installation guide 9 is axially fixed to the guide axis 5 by means of a lamination process with such precision as to maintain both elements joined together, while allowing the installation guide 9 to rotate freely within the orifice of the guide axis 5 when a rotation force is applied thereon through the orifices 8'.

The installation guide 9 and guide axis 5 assembly is introduced into the assembly in an anti-friction bushing 11, which in turn is embedded in an eccentric orifice belonging to a characteristic inner race track of a ball bearing 12, said bushing 11 being embedded by its lower part in a ring-shaped lid 13.

In order to reduce the friction between the guide axis 5 and the upper face of the inner race track 12' of the ball bearing 12 an indicator washer 14 is disposed which incorporates a projection 15 that carries out the mobile indicator function for adjusting the tension adjusting device.

The invention also has a torsional spring 16 housed within the ring-shaped lid 13 which provides the necessary force for the mobile part to swivel with respect to the guide axis 5 and a steel pulley 17 which is integrated with the outer race track of the ball bearing 12.

In order to install the tension adjusting device of the invention in the block of the motor or other bearing surface 2, the folded end of the support plate 1, flange 3, is positioned on the housing 4 that the block of the motor 2 has for such purpose and the anchoring screw (not represented in the figures) is introduced into the eccentric orifice 10 of the installation guide 9. Subsequently, using a tool Introduced in the orifices 8', the installation guide 9 is actuated until the pulley 17 comes Into contact with the belt, continuing to actuate the installation guide 9 against the belt until the spring 16 becomes tightened. The installation guide 9 is then actuated until the mobile point 15 of the indicator washer 14 becomes opposed to the fixed point 7 of the guide axis 5.

One of the ends 18 of the torsional spring 16 is anchored to the support plate 1, while the other end 19 of the spring 16 Is hooked onto a recess 20 of a projection stop 21 fixed to the inner race track 12' of the ball bearing 12.

The support plate 1 has a perimeter aperture limited by a circumferential edge and two end radial edges, front 22 and rear 23. The projection 21, which is a protuberance of the inner race track 12' of the ball bearing 12, is disposed in said aperture in such a manner that the stop is part of said inner race track of the ball bearing 12'. The projecting stop 21 has another two contact points 24 and 25 that will limit the oscillation path of the tension adjusting device, said contact points corresponding with the radial edges 22 and 23 of the support plate 1.

The optimal position of the projecting stop 21, once the fixed 7 and mobile 15 indicators are aligned, is the equidistant position between the end radial edges 22 and 23 of the aperture of support plate 1. In this manner, the mobile device is free to oscillate towards both sides in accordance with the variation in belt tension at a given time.

Given the difficulty in correctly aligning said fixed 7 and mobile 15 indicators, when the tension adjusting device is being installed in the vehicle, the projecting stop 21 may become displaced towards one of the ends 22 or 23 of the aperture of the support plate 1 and then, when functioning inside the vehicle, said stop 21 cannot oscillate freely, causing the end 24 of the projection 21 to collide with the end lateral edge 22 of the support plate 1 or that the end 25 of the projecting stop 21 to collide with the end lateral edge 23 of said support plate 1.

in other earlier patents, such as for example the patent of invention with publication number ES 2249603, said collision produces the rupture of the elements, causing motor breakdown. In said conventional embodiments, the collision is produced between an aluminium body inserted in the internal diameter of a ball bearing and support stops. In these cases, the ends of the aluminium body become damaged and end up breaking, as in the case of the support ends, which causes failure of the tension adjusting device and, inevitably, motor breakdown.

In turn, in the present invention this tension adjusting device failure phenomenon does not occur due to the characteristic design of the projecting stop 21 and end lateral edges 22 and 23 of the support plate 1.

The lateral end edges 22 and 23 that limit the ends of the oscillation path of the support plate 1 have been designed in such a manner that the ends 24 and 25 of the projecting stop 21 come into contact with the core of the material of the support plate 1, due to which they can satisfactorily resist the impact of ends 24 and 25 of the projecting stop 21.

This projecting stop 21 forms part of the inner race track 12' of the ball bearing 12, i.e. it is not an element inserted in the internal diameter of a standard ball bearing, as in the case of conventional patents. Said projecting stop 21 and the inner race track 12' of the ball bearing 12 are a single piece manufactured from a special material for ball bearing tracks, due to which said projecting stop 21 is not easily damaged or broken. The purpose of the ends of the aluminium body of other conventional patents has been integrated in the inner race track of the corresponding ball bearing 12.

Another additional advantage of the design of the present invention is that it integrates the pulley 17 function in the outer race track of the ball bearing 12, thereby eliminating the potential failure of the pulley becoming separated from the ball bearing whereon it is amounted. In turn, this integration represents an improvement in the alignment of the pulley with the ball bearing track and allows better control of the radial ball bearing assembly on having reduced the number of elements from two (pulley and mobile part of the ball bearing) to only one with both functions.

The hook of the torsional spring 16 is associated with the support plate 1 through a radial orifice 26 where the corresponding end 18 of said torsional spring 16 is adjusted.

## Claims

1. TENSION ADJUSTER FOR BELTS, which includes:
- a fixed support plate (1) to be supported on a bearing surface on an engine or similar, said plate including a perimeter aperture limited by a circumferential edge and two end lateral edges;
- a cylindrical tubular guide axis (5) fixed by its lower end to an opening in the support plate;
- an installation guide (9) embedded in the guide axis (5), having an eccentric orifice (10) for fixing the tension adjusting assembly to the bearing surface by means of a fixing element that is introduced through said eccentric orifice;
- a ball bearing (12), the internal race track of which comprises an eccentric housing wherein the installation guide and guide axis assembly is disposed with the interposition of an anti-friction bushing (11);
- a torsional spring (16) disposed in a ring-shaped IId embedded in a part of the anti-friction bushing, the torsional spring becoming tightened when the installation guide is rotated in one direction;
- a stop element that limits rotation in both directions in correspondence with the end lateral edges of the perimeter aperture belonging to the support plate, **characterised in that** the stop element comprises a projecting extension (21) that forms an integral part of the inner track (12') of the ball bearing (12), said projecting extension (21) having end stop areas, front (24) and rear (25), that can come into contact respectively with the end edges (22 and 23) of the perimeter aperture of the support plate (1).

2. TENSION ADJUSTER FOR BELTS, according to claim 1, **characterised in that** one end (18) of the torsional spring (18) is hooked onto a radial orifice (26) of the support plate (1), while the opposite end (19) is hooked onto a recess (20) established in the end stop area (25) of the projecting stop (21).

3. TENSION ADJUSTER FOR BELTS, according to any one of the preceding claims, **characterised in that** the outer race track (17) of the ball bearing (12) includes the pulley associated with a belt for tightening thereof.

## Patentansprüche

1. SPANNUNGSEINSTELLER FÜR RIEMEN, welcher beinhaltet:
- eine fixierte Halteplatte (1), die auf einer Stützfläche eines Motors oder ähnlichem gehalten wird, wobei die Platte eine Perimeteröffnung beinhaltet, die von einer umlaufenden Kante und zwei lateralen Endkanten begrenzt ist;
- eine zylindrische, röhrenförmige Führungsachse (5), die mit ihrem unteren Ende an einer Öffnung in der Halteplatte fixiert ist;
- eine in die Führungsachse (5) eingebettete Einbauführung (9) mit einer Exzenteröffnung (10) zur Fixierung der Spannungseinstelleinrichtung an der Stützfläche mithilfe eines Fixierungselementes, welches durch die Exzenteröffnung eingeführt wird;
- ein Kugellager (12), dessen Innenlauffläche ein Exzentergehäuse aufweist, wobei die Einbauführung und die Führungsachseneinrichtung mit einer dazwischen positionierten Antifriktionsbuchse (11) angeordnet sind;
- eine Torsionsfeder (16), die in einem ringförmigen Deckel angeordnet ist, der in einem Teil der Antifriktionsbuchse eingebettet ist, wobei die Torsionsfeder gespannt wird, wenn die Einbauführung in eine Richtung gedreht wird;
- ein Stoppelement, welches die Rotation in beide Richtungen entsprechend der lateralen Endkanten der Perimeteröffnung begrenzt, die zu der Halteplatte gehört, **dadurch gekennzeichnet, dass** das Stoppelement eine vorstehende Verlängerung (21) aufweist, die einen Bestandteil der Innenlauffläche (12) des Kugellagers (12') bildet, wobei die vorstehende Verlängerung (21) Endstoppbereiche aufweist, vorn (24) und hinten (26), die jeweils mit den Endkanten (22 und 23) der Perimeteröffnung der Halteplatte (1) in Berührung kommen können.

2. SPANNUNGSEINSTELLER FÜR RIEMEN nach Anspruch 1, **dadurch gekennzeichnet, dass** ein Ende (18) der Torsionsfeder (16) in eine radiale Öffnung (26) der Halteplatte (1) eingerastet wird, während das entgegengesetzte Ende (19) in eine Aussparung (20) eingerastet wird, die in dem Endstoppbereich (25) des vorstehenden Stoppelements (21) gebildet ist.

3. SPANNUNGSEINSTELLER FÜR RIEMEN nach einem der vorangegangenen Ansprüche, **dadurch gekennzeichnet, dass** die Außenlauffläche (17) des Kugellagers (12) die mit einem Riemen verbundene Riemenscheibe enthält, um diesen zu spannen.

## Revendications

1. Tendeur intégré pour courroies, qui comprend:
- une plaque de support fixe (1) qui doit être supportée sur une surface de palier sur un moteur ou similaire, ladite plaque comportant une ouverture périphérique limitée par un bord circonférentiel et deux bords latéraux d'extrémité;
- un axe de guidage tubulaire cylindrique (5) fixé par son extrémité inférieure à une ouverture dans la plaque de support;
- un guide d'installation (9) logé dans l'axe de guidage (5), présentant un orifice excentrique (10) destiné à fixer l'ensemble de réglage de la tension à la surface de palier au moyen d'un élément de fixation qui est introduit à travers ledit orifice excentrique;
- un roulement à billes (12), dont la bague intérieure comporte un logement excentrique dans lequel l'ensemble de guide d'installation et d'axe de guidage est disposé avec interposition d'un coussinet anti-friction (11);
- un ressort de torsion (16) disposé dans un couvercle en forme d'anneau logé dans une partie du coussinet anti-friction, le ressort de torsion étant tendu lorsque le guide d'installation est tourné dans un sens;
- un élément d'arrêt qui limite la rotation dans les deux sens en correspondance avec les bords latéraux d'extrémité de l'ouverture périphérique faisant partie de la plaque de support,
**caractérisé en ce que** l'élément d'arrêt comporte une extension saillante (21) qui fait intégralement partie de la bague intérieure (12') du roulement à billes (12), ladite extension saillante (21) présentant des faces d'arrêt d'extrémité, avant (24) et arrière (25), qui peuvent venir en contact respectivement avec les bords d'extrémité (22 et 23) de l'ouverture périphérique de la plaque de support (1).

2. Tendeur intégré pour courroies selon la revendication 1, **caractérisé en ce qu'**une extrémité (18) du ressort de torsion (16) est accrochée sur un orifice radial (26) de la plaque de support (1), tandis que l'extrémité opposée (19) est accrochée sur une encoche (20) pratiquée dans la face d'arrêt d'extrémité (25) de l'arrêt en saillie (21).

3. Tendeur intégré pour courroies selon l'une quelconque des revendications précédentes, **caractérisé en ce que** la bague extérieure (17) du roulement à billes (12) comprend la poulie associée à une courroie pour assurer la tension de celle-ci.
